Europäisches Patentamt

European Patent Office

Office européen des brevets

(11) Publication number: **0 489 427 A1**

## EUROPEAN PATENT APPLICATION

(21) Application number: **91120851.0**

(22) Date of filing: **04.12.91**

(51) Int. Cl.5: **B32B 15/01**, C23C 28/00, C23C 30/00

(30) Priority: **05.12.90 JP 400499/90**
**29.11.91 JP 316776/91**

(43) Date of publication of application:
**10.06.92 Bulletin 92/24**

(84) Designated Contracting States:
**DE FR GB**

(71) Applicant: **SUMITOMO METAL INDUSTRIES, LTD.**
**5-33, Kitahama 4-chome Chuo-ku**
**Osaka-Shi Osaka 541(JP)**

(72) Inventor: **Yamamoto, Yasuhiro**
**19-3 Katsuragi 2-chome, Kita-ku**
**Kobe-shi, Hyogo-ken(JP)**
Inventor: **Tsuda, Tetsuaki**
**1-2-10-301 Minami-Koshien**
**Nishinomiya-shi, Hyogo-ken(JP)**
Inventor: **Uchida, Junichi**
**2-4-203 Niihama-cho**
**Ashiya-shi, Hyogo-ken(JP)**
Inventor: **Seto, Hirohisa**
**4-127-403 Naka 1-chome, Koyo-cho**
**Higashi-Nada-ku, Kobe-shi, Hyogo-ken(JP)**

(74) Representative: **TER MEER - MÜLLER - STEINMEISTER & PARTNER**
**Mauerkircherstrasse 45**
**W-8000 München 80(DE)**

(54) **Surface-coated aluminum material.**

(57) A surface-coated aluminum material having improved corrosion resistance comprises a base aluminum or aluminum alloy material having on at least one surface thereof an aluminum-manganese alloy coating with a coating weight of 0.1 - 50 g/m$^2$ which may be further coated with an oxide film or chemical conversion coating. The aluminum-manganese alloy coating has the composition: Al-aMn-bX-cY-dZ

where a is 1 - 50 weight percent, b is 0 - 10 atomic percent, c is 0 - 3 atomic percent, and d is 0 - 5 atomic percent; X is one or more metals selected from the group consisting of Cu, Ag, Fe, Co, and Ni; Y is one or more metals selected from the group consisting of Mg, Ca, Sr, Ba, Zn, Cd, In, Tl, Si, Ge, Sn, Pb, As, Sb, and Bi; Z is one or more metals selected from the group consisting of Ti, Zr, Hf, V, Nb, Ta, Cr, Mo, W, and Re; and Al comprises the balance of the alloy.

The present invention relates to a surface-coated aluminum material which has improved corrosion resistance and good formability and weldability and which is suitable for use in automobiles, aircraft, appliances, and buildings.

Recently aluminum materials which are made of either pure aluminum or an aluminum alloy have been used increasingly in various applications due to their light weight and good corrosion resistance. For example, aluminum sheets are used in automobile bodies for the purpose of saving weight and thereby reducing fuel consumption. Aluminum panels are used as building materials, particularly in seaside waterfront areas where buildings are exposed to an extremely corrosive, saline environment, since conventional galvanized steel panels do not have sufficient corrosion resistance to withstand such an environment.

However, the corrosion resistance of aluminum materials in a saline environment is still unsatisfactory since they tend to suffer pit corrosion and filiform corrosion. In snowy areas, salt is frequently spread in winter on roads or on runways at airports to prevent the snow lying thereon from freezing. Therefore, under such conditions, automobiles and aircraft are exposed to a severe corrosive environment.

Accordingly, it is desired that aluminum materials for use in automobile or aircraft bodies as well as those for use in buildings have improved corrosion resistance capable of withstanding pit corrosion and filiform corrosion in a saline environment.

Aluminum materials for use in automobile bodies are usually assembled by welding. However, the weldability of aluminum materials is much inferior to that of galvanized steel sheets, particularly with respect to the number of weldable spots in continuous single spot welding.

Furthermore, in general, the formability of aluminum materials is rather poor and it is difficult to form them into a complicated shape by press forming.

Many attempts have been made to improve the properties of aluminum materials by surface coating. For example, Japanese Patent Application Laid-Open (Kokai) No. 61-157693(1986) discloses a surface-coated aluminum sheet with improved phosphating properties which comprises an Al or Al-based alloy sheet coated with a plating layer of Zn or a Zn-based or Fe-based alloy having a coating weight of at least 1 g/m².

However, there have been no attempts to improve the properties of aluminum materials by surface coating with an aluminum-based alloy. Surface coating with an aluminum-manganese alloy is known to provide good corrosion resistance, as described in Japanese Patent Publication (Kokoku) No. 43-18245-(1968) and Japanese Patent Application Laid-Open (Kokai) No. 61-213393(1986), but such a coating has been applied to a base material of a dissimilar metal such as steel including stainless steel and galvanized steel or titanium.

It is an object of the present invention to provide an aluminum material which is free from the above-described problems and which is suitable for use in automobiles, aircraft, appliances and buildings.

Another object of the invention is to provide an aluminum material which has improved resistance to corrosion, particularly pit corrosion and filiform corrosion in severe corrosive environment such as a saline environment.

A further object of the invention is to provide an aluminum material having improved weldability and formability.

These and other objects can be accomplished by a surface-coated aluminum material having improved corrosion resistance, comprising a base aluminum or aluminum alloy material having on at least one surface thereof an aluminum-manganese alloy coating with a coating weight of 0.1 - 50 g/m², in which the aluminum-manganese alloy coating has the composition:

Al-aMn-bX-cY-dZ

where a, b, c, and d are the contents of Mn, X, Y, and Z elements, respectively, and a is 1 - 50 weight percent, b is 0 - 10 atomic percent, c is 0 - 3 atomic percent, and d is 0 - 5 atomic percent;

X is one or more metals selected from the group consisting of Cu, Ag, Fe, Co, and Ni;

Y is one or more metals selected from the group consisting of Mg, Ca, Sr, Ba, Zn, Cd, In, Tl, Si, Ge, Sn, Pb, As, Sb, and Bi;

Z is one or more metals selected from the group consisting of Ti, Zr, Hf, V, Nb, Ta, Cr, Mo, W, and Re; and

Al comprises the balance of the alloy.

The aluminum-manganese alloy surface coating may be further coated with an oxide film or a chemical conversion coating such as a chromate or zinc phosphate coating.

The present invention is based on the findings that surface coating of an aluminum material with an aluminum-manganese alloy which may further contain one or more additional alloying elements serve to suppress pit corrosion and filiform corrosion of the material and improve the weldability and formability thereof, and that further improvement in corrosion resistance can be attained by forming an oxide coating or chemical conversion coating on the aluminum-manganese alloy surface coating.

The base material of the surface-coated aluminum material according to the present invention is made of pure aluminum or an aluminum alloy and it may be in any form such as a sheet, plate, panel, rod, bar, pipe, wire, or shaped or cast article. When the base material is an aluminum alloy, the alloy composition of the base material is not critical. Examples of aluminum alloys suitable for use as a base material are Al-Cu, Al-Mn, Al-Mg, Al-Mg-Si, Al-Zn, Al-Cu-Mg-Mn, and the like. Some specific examples are JIS 5000 and 6000 series Al-Mg alloys, which have recently been used frequently in automobiles in order to save weight and reduce fuel consumption, and JIS 3000 series Al-Mn alloys, which are often used as building materials or in appliances. Aluminum alloy castings and die castings, as well as JIS 7000 series Al alloys and duralumin, which are frequently used in aircraft, may also be used as a base material.

The base aluminum or aluminum alloy material is coated on at least one surface thereof with an aluminum-manganese alloy. Such an alloy coating can be readily formed on the surface of the base material by any suitable coating method such as electroplating, flame spraying, plasma spraying, rapid solidification method, CVD, PVD, ion plating, or ion spattering. Electrolytic plating is conveniently effected in a molten salt bath.

In order to improve the adhesion between the aluminum-manganese alloy surface coating and the base aluminum or aluminum alloy material, the surface of the base material to be coated with the aluminum-manganese alloy may be pretreated so as to form an undercoat layer of a metal such as Ni or Zn which has good adhesion to both the base material and the aluminum-manganese alloy coating. Such a coating can be formed, for example, by zincating, Ni plating, or anodic treatment.

The surface coating of an aluminum-manganese alloy has a composition of the following formula:

$$Al\text{-}\underline{a}Mn\text{-}\underline{b}X\text{-}\underline{c}Y\text{-}\underline{d}Z$$

where $\underline{a}$, $\underline{b}$, $\underline{c}$, and $\underline{d}$ are the contents of Mn, X, Y, and Z elements, respectively, and $\underline{a}$ is 1 - 50 weight percent, $\underline{b}$ is 0 - 10 atomic percent, $\underline{c}$ is 0 - 3 atomic percent, and $\underline{d}$ is 0 - 5 atomic percent;

X is one or more metals selected from the group consisting of Cu, Ag, Fe, Co, and Ni;

Y is one or more metals selected from the group consisting of Mg, Ca, Sr, Ba, Zn, Cd, In, Tl, Si, Ge, Sn, Pb, As, Sb, and Bi;

Z is one or more metals selected from the group consisting of Ti, Zr, Hf, V, Nb, Ta, Cr, Mo, W, and Re; and

Al comprises the balance of the alloy.

Thus, the surface coating may comprise either an Al-Mn alloy which consists essentially of Al and Mn, or an Al-Mn alloy which contains at least one additional alloying element and which includes an Al-Mn-X alloy, Al-Mn-Y alloy, Al-Mn-Z alloy, Al-Mn-X-Y alloy, Al-Mn-X-Z alloy, Al-Mn-Y-Z alloy, and Al-Mn-X-Y-Z alloy, where X, Y, and Z are as defined above. When the Al-Mn alloy contains at least one additional alloying element, it is preferably a ternary alloy which contains Al, Mn, and a single additional element X, Y, or Z for ease of control of the alloy composition.

When an aluminum or aluminum alloy base material having a surface coating of an Al-Mn alloy is exposed to a corrosive environment, preferential dissolution of manganese in the surface coating occurs and a corrosion product of $Al_2O_3$ covers the coated surface and protects it from further corrosion. Therefore, the coated surface of the base material exhibits better corrosion resistance than an uncoated surface of the base material.

The presence of at least one additional alloying element X, Y, or Z in the Al-Mn alloy surface coating significantly improves some properties of the surface-coated base material. For example, when the surface coating is an Al-Mn alloy containing at least one of the X elements which include Cu, Ag, Fe, Co, and Ni, the coating has an increased hardness and the sliding properties and hence the formability of the coated material are improved.

The addition of at least one of the Y elements including Mg, Ca, Sr, Ba, Zn, Cd, In, Tl, Si, Ge, Sn, Pb, As, Sb, and Bi to the Al-Mn alloy surface coating increases the ionization tendency and hence the sacrificial protection ability of the coating. Therefore, if the surface coating is injured such that the base material is exposed, the base material can be effectively protected from pit corrosion and the resistance to pit corrosion of the coated material is further improved.

Although the mechanism is not clear, when a base material coated with pure aluminum is subjected to spot welding, the tip electrodes are consumed rapidly, leading to a decrease in the lifetime of the electrodes used in continuous spot welding and the continuous spot weldability is degraded in terms of the number of weldable spots in continuous spot welding. Furthermore, the resulting welds have a poor nugget shape. However, when manganese is added to the aluminum surface coating, the continuous spot weldability of the coated material is improved. A further improvement in continuous spot weldability is attained by adding to the Al-Mn alloy coating at least one of the Z elements including Ti, Zr, Hf, V, Nb, Ta, Cr, Mo, W, and Re since these elements serve to increase the melting temperature of the coating. The Al-Mn alloy surface coating containing at least one of the Z elements also provides a cost savings in that the electric current required for spot welding is decreased.

The aluminum-manganese alloy surface coating has a coating weight of 0.1 - 50 g/m$^2$ and contains 1% - 50% by weight Mn in order to ensure that the resulting surface-coated aluminum or aluminum alloy base material has a significantly improved corrosion resistance while still having good formability. When the coating weight is less than 0.1 g/m$^2$, the corrosion resistance of the coated material is not improved sufficiently A surface coating having a weight of greater than 50 g/m$^2$ is so thick that not only the formability but also the corrosion resistance is impaired. A surface coating containing less than 1% by weight Mn does not provide a sufficient improvement in corrosion resistance, while one containing more than 50% by weight Mn results in a decrease in formability.

Preferably, the aluminum-manganese alloy surface coating has a weight of 2 - 30 g/m$^2$ and an Mn content of 15% - 35% by weight. A coating having a weight of 2 g/m$^2$ or greater can withstand a more severe environment than a coating having a lower weight. A coating having a weight of not greater than 30 g/m$^2$ is improved in spot weldability and formability over a coating having a greater weight. When the Mn content of the surface coating is less than 15% or more than 35% by weight, the coated material may have deteriorated formability or surface appearance.

More preferably, the aluminum-manganese alloy surface coating has a weight of 5 - 20 g/m$^2$ and an Mn content of 25% - 35% by weight. A coating having a weight of 5 g/m$^2$ or greater can withstand an even more severe environment than a coating having a lower weight and it protects the base material more effectively since a surface flaw, if formed, has difficulty in reaching the base material through the coating. A coating having a weight of not greater than 20 g/m$^2$ is much improved in spot weldability and formability over a coating having a greater weight and it is more economical. A surface coating having an Mn content of 25% - 35% by weight is much improved in formability and it has a highly acceptable glossy appearance of silver white color.

When the Al-Mn alloy surface coating contains one or more X elements (Cu, Ag, Fe, Co, and Ni) as additional alloying elements, the total content of the X elements is preferably 0.005 - 10 atomic percent of the alloy. A content of lower than 0.005 atomic percent does not result in a significant increase in hardness of the coating and the formability is not appreciably improved. An Al-Mn alloy containing more than 10 atomic percent of the X elements has poor corrosion resistance. More preferably, the total content of the X elements is 0.5 - 7 atomic percent.

When the Al-Mn alloy surface coating contains one or more Y elements (Mg, Ca, Sr, Ba, Zn, Cd, In, Tl, Si, Ge, Sn, Pb, As, Sb, and Bi) as additional alloying elements, the total content of the Y elements is preferably 0.002 - 3 atomic percent of the alloy. A content of lower than 0.002 atomic percent does not form a coating having an appreciably increased ionization tendency and hence an improved resistance to pit corrosion. An Al-Mn alloy containing more than 3 atomic percent of the Y elements has poor corrosion resistance. More preferably, the total content of the Y elements is 0.1 - 2 atomic percent.

When the Al-Mn alloy surface coating contains one or more Z elements (Ti, Zr, Hf, V, Nb, Ta, Cr, Mo, W, and Re) as additional alloying elements, the total content of the Z elements is preferably 0.005 - 5 atomic percent of the alloy. A content of lower than 0.005 atomic percent does not appreciably increase the melting temperature of the resulting coating, so the spot weldability is not improved significantly. An Al-Mn alloy containing more than 5 atomic percent of the Z elements has poor corrosion resistance. More preferably, the total content of the Z elements is 0.5 - 3 atomic percent.

Although the surface-coated aluminum or aluminum alloy material according to the present invention has good corrosion resistance as illustrated in the example given below, a further improvement in corrosion resistance is attained by forming a layer of an oxide film or a chemical conversion coating (either a chromate or zinc phosphate coating) on the aluminum-manganese alloy surface coating.

The oxide film serves as a barrier which prevents the passage of corrosion current. It is preferably formed to a thickness of 0.01 - 1 μm by electrolytic (anodic) oxidation or immersion treatment. An oxide film thinner than 0.01 μm has poor insulating properties and does not provide an appreciable improvement in corrosion resistance. An oxide film thicker than 1 μm is degraded in spot weldability.

The chemical conversion coating which is either a chromate or zinc phosphate coating forms corrosion products of Al and Cr or Zn, which contribute to further improvement in corrosion resistance. For this purpose, the coating weight is preferably 5 - 200 $mg/m^2$ as Cr for a chromate coating and 0.1 - 5 $g/m^2$ for a zinc phosphate coating. A lower coating weight does not provide an appreciable improvement in corrosion resistance, while a higher coating weight results in a deterioration in corrosion resistance after finish coating. The chemical conversion coating can be formed by a conventional chromating or zinc phosphating process.

The following example is presented as a specific illustration of the claimed invention. It should be understood, however, that the invention is not limited to the specific details set forth in the example.

Example

Pure aluminum sheets and aluminum alloy sheets as base materials which had a thickness of 1 mm and the compositions shown in Table 1 were plated on both surfaces thereof with an aluminum-manganese alloy by molten salt electrolytic plating under the following conditions.

[Conditions for Al-Mn Alloy Plating by Molten Salt Electrolysis]

| Composition of basic molten salt bath: A mixed molten salt of 62 mole% of $AlCl_3$, 20 mole% of NaCl, and 18 mole% of KCl | |
|---|---|
| Bath temperature: | 200°C |
| Additives: | $MnCl_2$ (50 - 6000 ppm*) Chlorides of additional alloying metals as required (50 - 6000 ppm*) |
| Current density: | 60 $A/dm^2$ |

*ionic concentration in the bath

The basic alloy composition and the content of additional alloying element or elements, if any, of the resulting Al-Mn alloy plating layer and its coating weight are also shown in Table 1.

Some of the plated sheets were then subjected to post-treatment by electrolytic (anodic) oxidation, chromate treatment, or zinc phosphate treatment under the following conditions.

[Conditions for Electrolytic Oxidation]

| Treating Solution: | Aqueous 10% boric acid solution |
|---|---|
| Bath temperature: | 20°C |
| Bath voltage: | 60V (AC) |
| Treating time: | 1 minute |
| Oxide film thickness: | about 1 $\mu$m |

[Conditions for Chromating]

| $Cr_2O_3$: | 3.5 - 4.0 g/l |
|---|---|
| $Na_2Cr_2O_7$: | 3.0 - 3.5 g/l |
| NaF: | 0.8 g/l |
| pH: | 1.5 |
| Treating temperature: | 30°C |
| Treating time: | 3 minutes (dipping) |
| Coating weight: | 10 - 30 $mg/m^2$ as Cr |

[Conditions for Phosphating]

| Treating solution: | A zinc phosphate solution (PBL 3020, sold by Japan Parkerizing) to which fluoride ions were added |
|---|---|
| Treating temperature: | 45°C |
| Treating time: | 2 minutes (dipping) |
| Coating weight: | 1 - 3 g/m$^2$ |

Test pieces were cut from the resulting surface-coated aluminum or aluminum alloy sheets and subjected to a corrosion, impact, press forming, or welding test to evaluate the corrosion resistance, formability, and spot weldability of each surface-coated sheet. The testing procedures are summarized below and the test results are also given in Table 1.

[Testing Procedures]

1) Corrosion Resistance:

Test pieces were subjected to a salt spray test according to JIS Z2371 for 2000 hours. After the test, the weight loss of each test piece was determined and corrosion resistance was evaluated by the rate of weight loss (RWL) and assigned one of the following five grades.

Grade

5 : $RWL \leq 0.1$ mg/m$^2$-hr
4 : $0.1$ mg/m$^2$-hr $< RWL \leq 1$ mg/m$^2$-hr
3 : $1$ mg/m$^2$-hr $< RWL \leq 5$ mg/m$^2$-hr
4 : $5$ mg/m$^2$-hr $< RWL \leq 10$ mg/m$^2$-hr
1 : $RWL > 10$ mg/m$^2$-hr

2) Resistance to Pit Corrosion:

After the salt spray test in the corrosion test, the Al-Mn alloy coating on each test piece was removed to reveal the surface of the base material, which was visually observed for the formation of pits. The results were graded as follows.

◎ : no pit
○ : a small number of minute pits
△ : a considerable number of pits
× : a large number of pits

3) Spot Weldability:

Two test pieces of each surface-coated sheet were welded by continuous spot welding using a single spot welder under the following conditions.

| Welding current: | 9000 A |
|---|---|
| Weld time: | 12 cycles |
| Pressure: | 1960 N |
| Electrodes: | Cu-Cr alloy |
| Welding speed: | 1 spot/second |

The results were evaluated by the number of welded spots formed before the shape of nuggets had deformed by consumption of electrodes and assigned one of the following five grades.

Grade

5 : 5000 spots or greater
4 : less than 5000 spots but not less than 3500 spots
3 : less than 3500 spots but not less than 2000 spots
2 : less than 2000 spots but not less than 500 spots
1 : less than 500 spots

4) Formability (1):

A Du Pont impact tester (diameter of round head: 1/2 inch) was used to apply an impact to test pieces with an energy of 0.8 kgf-m (7.84 N-m). Each test piece was then subjected to an adhesive tape peeling test to evaluate the adhesion of the coating by visually observing the flakes adhering on the adhesive tape. The results were classified as follows.

◎ :     no flakes
○ :     powdery minute flakes but no problem in practical use
△ :     small flakes
× :     large flakes

5) Formability (2):

Press formability of test pieces was tested using a beaded press. Each test piece was press-formed between a beaded blank holder and a die into a hat shape 55 mm in height, and the surface of the press-formed test piece facing the blank holder was subjected to an adhesive tape peeling test to evaluate the resistance to flaking by counting the number of flakes adhering to the adhesive tape. The results were classified as follows.

◎ :     no flakes
○ :     few flakes
△ :     a considerable number of flakes
× :     a large number of flakes

TABLE 1

| Run No. | Composition of base material (wt%) | Al alloy coating | | Other element (at%) | Post treat-ment | Corrosion resistance (weight loss) | Pit corrosion of base material | Spot weld-ability in continuous spot welding | Formability | | Remarks |
|---|---|---|---|---|---|---|---|---|---|---|---|
| | | Basic compo-sition (wt%) | weight (g/m²) | | | | | | (1) | (2) | |
| 1 | Al-1%Mg-0.5%Si | Al-0.1%Mn | 20 | — | — | 1 | × | 2 | ◎ | ○ | Compar. |
| 2 | Al-1%Mg-0.5%Si | Al-1%Mn | 20 | — | — | 2 | △ | 3 | ◎ | ○ | Invent. |
| 3 | Al-1%Mg-0.5%Si | Al-10%Mn | 20 | — | — | 3 | ○ | 3 | ◎ | ○ | ″ |
| 4 | Al-1%Mg-0.5%Si | Al-25%Mn | 20 | — | — | 4 | ○ | 4 | ◎ | ○ | ″ |
| 5 | Al-1%Mg-0.5%Si | Al-35%Mn | 20 | — | — | 4 | ○ | 4 | ◎ | ○ | ″ |
| 6 | Al-1%Mg-0.5%Si | Al-45%Mn | 20 | — | — | 3 | ○ | 4 | ○ | △ | ″ |
| 7 | Al-1%Mg-0.5%Si | Al-55%Mn | 20 | — | — | 2 | △ | 3 | △ | × | Compar. |
| 8 | Al-1%Mg-0.5%Si | Al-30%Mn | 0.05 | — | — | 1 | × | 4 | ◎ | ○ | ″ |
| 9 | Al-1%Mg-0.5%Si | Al-30%Mn | 0.1 | — | — | 2 | △ | 4 | ◎ | ○ | Invent. |
| 10 | Al-1%Mg-0.5%Si | Al-30%Mn | 2 | — | — | 3 | ○ | 4 | ◎ | ○ | ″ |
| 11 | Al-1%Mg-0.5%Si | Al-30%Mn | 5 | — | — | 3 | ○ | 4 | ◎ | ○ | ″ |
| 12 | Al-1%Mg-0.5%Si | Al-30%Mn | 20 | — | — | 4 | ○ | 4 | ◎ | ○ | ″ |
| 13 | Al-1%Mg-0.5%Si | Al-30%Mn | 30 | — | — | 4 | ○ | 4 | ◎ | ○ | ″ |
| 14 | Al-1%Mg-0.5%Si | Al-30%Mn | 50 | — | — | 5 | ○ | 3 | ○ | △ | ″ |
| 15 | Al-1%Mg-0.5%Si | Al-30%Mn | 60 | — | — | 5 | ○ | 3 | × | × | Compar. |
| 16 | pure Al | Al-30%Mn | 5 | — | — | 3 | ○ | 4 | ◎ | ○ | Invent. |
| 17 | pure Al | Al-30%Mn | 15 | — | — | 4 | ○ | 4 | ◎ | ○ | ″ |
| 18 | pure Al | Al-30%Mn | 30 | — | — | 4 | ○ | 4 | ◎ | ○ | ″ |
| 19 | pure Al | Al-30%Mn | 40 | — | — | 4 | ○ | 3 | ○ | △ | ″ |
| 20 | Al-5.5%Cu | Al-30%Mn | 5 | — | — | 3 | ○ | 4 | ◎ | ○ | ″ |
| 21 | Al-5.5%Cu | Al-30%Mn | 15 | — | — | 4 | ○ | 4 | ◎ | ○ | ″ |
| 22 | Al-5.5%Cu | Al-30%Mn | 30 | — | — | 4 | ○ | 4 | ◎ | ○ | ″ |
| 23 | Al-5.5%Cu | Al-30%Mn | 40 | — | — | 4 | ○ | 3 | ○ | △ | ″ |
| 24 | Al-1.3%Mn | Al-30%Mn | 5 | — | — | 3 | ○ | 4 | ◎ | ○ | ″ |
| 25 | Al-1.3%Mn | Al-30%Mn | 15 | — | — | 4 | ○ | 4 | ◎ | ○ | ″ |
| 26 | Al-1.3%Mn | Al-30%Mn | 30 | — | — | 4 | ○ | 4 | ◎ | ○ | ″ |
| 27 | Al-1.3%Mn | Al-30%Mn | 40 | — | — | 4 | ○ | 3 | ○ | △ | ″ |
| 28 | Al-5.0%Mg | Al-30%Mn | 5 | — | — | 3 | ○ | 4 | ◎ | ○ | ″ |
| 29 | Al-5.0%Mg | Al-30%Mn | 15 | — | — | 4 | ○ | 4 | ◎ | ○ | ″ |
| 30 | Al-5.0%Mg | Al-30%Mn | 30 | — | — | 4 | ○ | 4 | ◎ | ○ | ″ |
| 31 | Al-5.0%Mg | Al-30%Mn | 40 | — | — | 4 | ○ | 3 | ○ | △ | ″ |
| 32 | Al-5.5%Zn | Al-30%Mn | 5 | — | — | 3 | ○ | 4 | ◎ | ○ | ″ |
| 33 | Al-5.5%Zn | Al-30%Mn | 15 | — | — | 4 | ○ | 4 | ◎ | ○ | ″ |
| 34 | Al-5.5%Zn | Al-30%Mn | 30 | — | — | 4 | ○ | 4 | ◎ | ○ | ″ |
| 35 | Al-5.5%Zn | Al-30%Mn | 40 | — | — | 4 | ○ | 3 | ○ | △ | ″ |

(to be continued)

EP 0 489 427 A1

TABLE 1 (continued)

| Run No. | Composition of base material (wt%) | Al alloy coating Basic composition (wt%) | weight (g/m²) | Other element (at%) | Post treatment | Corrosion resistance (weight loss) | Pit corrosion of base material | Spot weldability in continuous spot welding | Formability (1) | (2) | Remarks |
|---|---|---|---|---|---|---|---|---|---|---|---|
| 36 | Al-4.0%Cu-0.5%Mg-0.5%Mn | Al-30%Mn | 5 | — | — | 3 | ○ | 4 | ◎ | ○ | Invent. |
| 37 | Al-4.0%Cu-0.5%Mg-0.5%Mn | Al-30%Mn | 15 | — | — | 4 | ○ | 4 | ◎ | ○ | " |
| 38 | Al-4.0%Cu-0.5%Mg-0.5%Mn | Al-30%Mn | 30 | — | — | 4 | ○ | 4 | ◎ | ○ | " |
| 39 | Al-4.0%Cu-0.5%Mg-0.5%Mn | Al-30%Mn | 40 | — | — | 4 | ○ | 3 | ○ | △ | " |
| 40 | Al-1.6%Cu-2.5%Mg-5.6%Zn-0.3%Cr | Al-30%Mn | 20 | — | — | 4 | ○ | 4 | ◎ | ○ | " |
| 41 | Al-1%Mg-0.5%Si | Al-0.1%Mn | 20 | 5.0%Fe | — | 1 | × | 2 | ◎ | ◎ | Compar. |
| 42 | Al-1%Mg-0.5%Si | Al-1%Mn | 20 | 5.0%Fe | — | 2 | △ | 3 | ◎ | ◎ | Invent. |
| 43 | Al-1%Mg-0.5%Si | Al-10%Mn | 20 | 5.0%Fe | — | 3 | ○ | 3 | ◎ | ◎ | " |
| 44 | Al-1%Mg-0.5%Si | Al-25%Mn | 20 | 5.0%Fe | — | 4 | ○ | 4 | ◎ | ◎ | " |
| 45 | Al-1%Mg-0.5%Si | Al-35%Mn | 20 | 5.0%Fe | — | 4 | ○ | 4 | ◎ | ◎ | " |
| 46 | Al-1%Mg-0.5%Si | Al-45%Mn | 20 | 5.0%Fe | — | 3 | ○ | 4 | ○ | ○ | " |
| 47 | Al-1%Mg-0.5%Si | Al-55%Mn | 20 | 5.0%Fe | — | 2 | △ | 3 | △ | △ | Compar. |
| 48 | Al-1%Mg-0.5%Si | Al-30%Mn | 0.05 | 5.0%Fe | — | 1 | × | 4 | ◎ | ◎ | " |
| 49 | Al-1%Mg-0.5%Si | Al-30%Mn | 0.1 | 5.0%Fe | — | 2 | △ | 4 | ◎ | ◎ | Invent. |
| 50 | Al-1%Mg-0.5%Si | Al-30%Mn | 2 | 5.0%Fe | — | 3 | ○ | 4 | ◎ | ◎ | " |
| 51 | Al-1%Mg-0.5%Si | Al-30%Mn | 5 | 5.0%Fe | — | 3 | ○ | 4 | ◎ | ◎ | " |
| 52 | Al-1%Mg-0.5%Si | Al-30%Mn | 20 | 5.0%Fe | — | 4 | ○ | 4 | ◎ | ◎ | " |
| 53 | Al-1%Mg-0.5%Si | Al-30%Mn | 30 | 5.0%Fe | — | 4 | ○ | 4 | ◎ | ◎ | " |
| 54 | Al-1%Mg-0.5%Si | Al-30%Mn | 50 | 5.0%Fe | — | 5 | ○ | 4 | ○ | ○ | " |
| 55 | Al-1%Mg-0.5%Si | Al-30%Mn | 60 | 5.0%Fe | — | 5 | ○ | 4 | △ | △ | Compar. |
| 56 | Al-1%Mg-0.5%Si | Al-30%Mn | 20 | 0.005%Fe | — | 4 | ○ | 4 | ◎ | ◎ | Invent. |
| 57 | Al-1%Mg-0.5%Si | Al-30%Mn | 20 | 0.1%Fe | — | 4 | ○ | 4 | ◎ | ◎ | " |
| 58 | Al-1%Mg-0.5%Si | Al-30%Mn | 20 | 1.0%Fe | — | 4 | ○ | 4 | ◎ | ◎ | " |
| 59 | Al-1%Mg-0.5%Si | Al-30%Mn | 20 | 5.0%Fe | — | 4 | ○ | 4 | ◎ | ◎ | " |
| 60 | Al-1%Mg-0.5%Si | Al-30%Mn | 20 | 10.0%Fe | — | 3 | ○ | 4 | ◎ | ◎ | " |
| 61 | Al-1%Mg-0.5%Si | Al-30%Mn | 20 | 15.0%Fe | — | 2 | △ | 4 | ◎ | ◎ | Compar. |
| 62 | Al-1%Mg-0.5%Si | Al-30%Mn | 20 | 0.1%Cu | — | 4 | ○ | 4 | ◎ | ◎ | Invent. |
| 63 | Al-1%Mg-0.5%Si | Al-30%Mn | 20 | 1.0%Cu | — | 4 | ○ | 4 | ◎ | ◎ | " |
| 64 | Al-1%Mg-0.5%Si | Al-30%Mn | 20 | 5.0%Cu | — | 4 | ○ | 4 | ◎ | ◎ | " |
| 65 | Al-1%Mg-0.5%Si | Al-30%Mn | 20 | 0.1%Ni | — | 4 | ○ | 4 | ◎ | ◎ | " |
| 66 | Al-1%Mg-0.5%Si | Al-30%Mn | 20 | 1.0%Ni | — | 4 | ○ | 4 | ◎ | ◎ | " |
| 67 | Al-1%Mg-0.5%Si | Al-30%Mn | 20 | 5.0%Ni | — | 4 | ○ | 4 | ◎ | ◎ | " |
| 68 | Al-1%Mg-0.5%Si | Al-30%Mn | 20 | 5.0%Ag | — | 4 | ○ | 4 | ◎ | ◎ | " |
| 69 | Al-1%Mg-0.5%Si | Al-30%Mn | 20 | 5.0%Co | — | 4 | ○ | 4 | ◎ | ◎ | " |
| 70 | Al-1%Mg-0.5%Si | Al-30%Mn | 20 | 1.0%Fe. 1.0%Mg | — | 4 | ◎ | 4 | ◎ | ◎ | Invent. |

(to be continued)

EP 0 489 427 A1

TABLE 1 (continued)

| Run No. | Composition of base material (wt%) | Al alloy coating | | Other element (at%) | Post treat-ment | Corrosion resistance (weight loss) | Pit corrosion of base material | Spot weld-ability in continuous spot welding | Formability | | Remarks |
|---|---|---|---|---|---|---|---|---|---|---|---|
| | | Basic compo-sition (wt%) | weight (g/m²) | | | | | | (1) | (2) | |
| 71 | Al-1%Mg-0.5%Si | Al-30%Mn | 20 | 1.0%Ni 1.0%Sn | — | 4 | ◎ | 4 | ◎ | ◎ | Invent. |
| 72 | Al-1%Mg-0.5%Si | Al-30%Mn | 20 | 1.0%Ti 1.0%Sn | — | 4 | ◎ | 5 | ◎ | ○ | " |
| 73 | pure Al | Al-30%Mn | 20 | 1.0%Fe | — | 4 | ○ | 4 | ◎ | ◎ | " |
| 74 | pure Al | Al-30%Mn | 20 | 5.0%Fe | — | 4 | ○ | 4 | ◎ | ◎ | " |
| 75 | Al-5.5%Cu | Al-30%Mn | 20 | 1.0%Fe | — | 4 | ○ | 4 | ◎ | ◎ | " |
| 76 | Al-5.5%Cu | Al-30%Mn | 20 | 5.0%Fe | — | 4 | ○ | 4 | ◎ | ◎ | " |
| 77 | Al-1.3%Mn | Al-30%Mn | 20 | 1.0%Fe | — | 4 | ○ | 4 | ◎ | ◎ | " |
| 78 | Al-1.3%Mn | Al-30%Mn | 20 | 5.0%Fe | — | 4 | ○ | 4 | ◎ | ◎ | " |
| 79 | Al-5.0%Mg | Al-30%Mn | 20 | 1.0%Fe | — | 4 | ○ | 4 | ◎ | ◎ | " |
| 80 | Al-5.0%Mg | Al-30%Mn | 20 | 5.0%Fe | — | 4 | ○ | 4 | ◎ | ◎ | " |
| 81 | Al-5.5%Zn | Al-30%Mn | 20 | 1.0%Fe | — | 4 | ○ | 4 | ◎ | ◎ | " |
| 82 | Al-5.5%Zn | Al-30%Mn | 20 | 5.0%Fe | — | 4 | ○ | 4 | ◎ | ◎ | " |
| 83 | Al-4.0%Cu-0.5%Mg-0.5%Mn | Al-30%Mn | 20 | 1.0%Fe | — | 4 | ○ | 4 | ◎ | ◎ | " |
| 84 | Al-4.0%Cu-0.5%Mg-0.5%Mn | Al-30%Mn | 20 | 5.0%Fe | — | 4 | ○ | 4 | ◎ | ◎ | " |
| 85 | Al-1.6%Cu-2.5%Mg-5.6%Zn-0.3%Cr | Al-30%Mn | 20 | 5.0%Fe | — | 4 | ○ | 4 | ◎ | ◎ | " |
| 86 | Al-1%Mg-0.5%Si | Al-0.1%Mn | 20 | 1.0%Zn | — | 1 | ○ | 2 | ◎ | ○ | Compar. |
| 87 | Al-1%Mg-0.5%Si | Al-1%Mn | 20 | 1.0%Zn | — | 2 | ○ | 3 | ◎ | ○ | Invent. |
| 88 | Al-1%Mg-0.5%Si | Al-10%Mn | 20 | 1.0%Zn | — | 3 | ◎ | 3 | ◎ | ○ | " |
| 89 | Al-1%Mg-0.5%Si | Al-25%Mn | 20 | 1.0%Zn | — | 4 | ◎ | 4 | ◎ | ○ | " |
| 90 | Al-1%Mg-0.5%Si | Al-35%Mn | 20 | 1.0%Zn | — | 4 | ◎ | 4 | ◎ | ○ | " |
| 91 | Al-1%Mg-0.5%Si | Al-45%Mn | 20 | 1.0%Zn | — | 3 | ◎ | 4 | ○ | △ | " |
| 92 | Al-1%Mg-0.5%Si | Al-55%Mn | 20 | 1.0%Zn | — | 2 | ○ | 3 | △ | × | Compar. |
| 93 | Al-1%Mg-0.5%Si | Al-30%Mn | 0.05 | 1.0%Zn | — | 1 | ○ | 4 | ◎ | ○ | " |
| 94 | Al-1%Mg-0.5%Si | Al-30%Mn | 0.1 | 1.0%Zn | — | 2 | ○ | 4 | ◎ | ○ | Invent. |
| 95 | Al-1%Mg-0.5%Si | Al-30%Mn | 2 | 1.0%Zn | — | 3 | ◎ | 4 | ◎ | ○ | " |
| 96 | Al-1%Mg-0.5%Si | Al-30%Mn | 5 | 1.0%Zn | — | 3 | ◎ | 4 | ◎ | ○ | " |
| 97 | Al-1%Mg-0.5%Si | Al-30%Mn | 20 | 1.0%Zn | — | 4 | ◎ | 4 | ◎ | ○ | " |
| 98 | Al-1%Mg-0.5%Si | Al-30%Mn | 30 | 1.0%Zn | — | 4 | ◎ | 4 | ◎ | ○ | " |
| 99 | Al-1%Mg-0.5%Si | Al-30%Mn | 50 | 1.0%Zn | — | 5 | ◎ | 3 | ○ | △ | " |
| 100 | Al-1%Mg-0.5%Si | Al-30%Mn | 60 | 1.0%Zn | — | 5 | ◎ | 3 | △ | × | Compar. |
| 101 | Al-1%Mg-0.5%Si | Al-30%Mn | 20 | 0.002%Zn | — | 4 | ◎ | 4 | ◎ | ○ | Invent. |
| 102 | Al-1%Mg-0.5%Si | Al-30%Mn | 20 | 0.1%Zn | — | 4 | ◎ | 4 | ◎ | ○ | " |

(to be continued)

EP 0 489 427 A1

TABLE 1 (continued)

| Run No. | Composition of base material (wt%) | Al alloy coating Basic composition (wt%) | weight (g/m²) | Other element (at%) | Post treatment | Corrosion resistance (weight loss) | Pit corrosion of base material | Spot weldability in continuous spot welding | Formability (1) | (2) | Remarks |
|---|---|---|---|---|---|---|---|---|---|---|---|
| 103 | Al-1%Mg-0.5%Si | Al-30%Mn | 20 | 1.0%Zn | — | 4 | ◎ | 4 | ◎ | ○ | Invent. |
| 104 | Al-1%Mg-0.5%Si | Al-30%Mn | 20 | 3.0%Zn | — | 4 | ◎ | 4 | ◎ | ○ | ″ |
| 105 | Al-1%Mg-0.5%Si | Al-30%Mn | 20 | 0.1%Mg | — | 4 | ◎ | 4 | ◎ | ○ | ″ |
| 106 | Al-1%Mg-0.5%Si | Al-30%Mn | 20 | 1.0%Mg | — | 4 | ◎ | 4 | ◎ | ○ | ″ |
| 107 | Al-1%Mg-0.5%Si | Al-30%Mn | 20 | 0.1%In | — | 4 | ◎ | 4 | ◎ | ○ | ″ |
| 108 | Al-1%Mg-0.5%Si | Al-30%Mn | 20 | 1.0%In | — | 4 | ◎ | 4 | ◎ | ○ | ″ |
| 109 | Al-1%Mg-0.5%Si | Al-30%Mn | 20 | 0.1%Pb | — | 4 | ◎ | 4 | ◎ | ○ | ″ |
| 110 | Al-1%Mg-0.5%Si | Al-30%Mn | 20 | 1.0%Pb | — | 4 | ◎ | 4 | ◎ | ○ | ″ |
| 111 | Al-1%Mg-0.5%Si | Al-30%Mn | 20 | 0.1%Sn | — | 4 | ◎ | 4 | ◎ | ○ | ″ |
| 112 | Al-1%Mg-0.5%Si | Al-30%Mn | 20 | 1.0%Sn | — | 4 | ◎ | 4 | ◎ | ○ | ″ |
| 113 | Al-1%Mg-0.5%Si | Al-30%Mn | 20 | 1.0%Ca | — | 4 | ◎ | 4 | ◎ | ○ | ″ |
| 114 | Al-1%Mg-0.5%Si | Al-30%Mn | 20 | 1.0%Sr | — | 4 | ◎ | 4 | ◎ | ○ | ″ |
| 115 | Al-1%Mg-0.5%Si | Al-30%Mn | 20 | 1.0%Ba | — | 4 | ◎ | 4 | ◎ | ○ | ″ |
| 116 | Al-1%Mg-0.5%Si | Al-30%Mn | 20 | 1.0%Cd | — | 4 | ◎ | 4 | ◎ | ○ | ″ |
| 117 | Al-1%Mg-0.5%Si | Al-30%Mn | 20 | 1.0%Tl | — | 4 | ◎ | 4 | ◎ | ○ | ″ |
| 118 | Al-1%Mg-0.5%Si | Al-30%Mn | 20 | 1.0%Si | — | 4 | ◎ | 4 | ◎ | ○ | ″ |
| 119 | Al-1%Mg-0.5%Si | Al-30%Mn | 20 | 1.0%Ge | — | 4 | ◎ | 4 | ◎ | ○ | ″ |
| 120 | Al-1%Mg-0.5%Si | Al-30%Mn | 20 | 1.0%As | — | 4 | ◎ | 4 | ◎ | ○ | ″ |
| 121 | Al-1%Mg-0.5%Si | Al-30%Mn | 20 | 1.0%Sb | — | 4 | ◎ | 4 | ◎ | ○ | ″ |
| 122 | Al-1%Mg-0.5%Si | Al-30%Mn | 20 | 1.0%Bi | — | 4 | ◎ | 4 | ◎ | ○ | ″ |
| 123 | Al-1%Mg-0.5%Si | Al-30%Mn | 20 | 1.0%Zn 1.0%Cr | — | 4 | ◎ | 5 | ◎ | ○ | ″ |
| 124 | Al-1%Mg-0.5%Si | Al-30%Mn | 20 | 1.0%Ni 1.0%Cr | — | 4 | ○ | 5 | ◎ | ◎ | ″ |
| 125 | Al-1%Mg-0.5%Si | Al-30%Mn | 20 | 1.0%Fe 1.0%Ti | — | 4 | ○ | 5 | ◎ | ◎ | ″ |
| 126 | Al-1%Mg-0.5%Si | Al-30%Mn | 20 | 2.0%Fe 1.0%Zn 2.0%Ti | — | 4 | ◎ | 5 | ◎ | ◎ | ″ |
| 127 | Al-1%Mg-0.5%Si | Al-30%Mn | 20 | 3.0%Ni 1.0%In 3.0%Ti | — | 4 | ◎ | 5 | ◎ | ◎ | ″ |
| 128 | pure Al | Al-30%Mn | 20 | 0.1%Zn | — | 4 | ◎ | 4 | ◎ | ○ | ″ |
| 129 | pure Al | Al-30%Mn | 20 | 1.0%Zn | — | 4 | ◎ | 4 | ◎ | ○ | ″ |
| 130 | Al-5.5%Cu | Al-30%Mn | 20 | 0.1%Zn | — | 4 | ◎ | 4 | ◎ | ○ | ″ |
| 131 | Al-5.5%Cu | Al-30%Mn | 20 | 1.0%Zn | — | 4 | ◎ | 4 | ◎ | ○ | ″ |
| 132 | Al-1.3%Mn | Al-30%Mn | 20 | 0.1%Zn | — | 4 | ◎ | 4 | ◎ | ○ | ″ |
| 133 | Al-1.3%Mn | Al-30%Mn | 20 | 1.0%Zn | — | 4 | ◎ | 4 | ◎ | ○ | ″ |
| 134 | Al-5.0%Mg | Al-30%Mn | 20 | 0.1%Zn | — | 4 | ◎ | 4 | ◎ | ○ | ″ |
| 135 | Al-5.0%Mg | Al-30%Mn | 20 | 1.0%Zn | — | 4 | ◎ | 4 | ◎ | ○ | ″ |
| 136 | Al-5.5%Zn | Al-30%Mn | 20 | 0.1%Zn | — | 4 | ◎ | 4 | ◎ | ○ | ″ |

(to be continued)

EP 0 489 427 A1

TABLE 1 (continued)

| Run No. | Composition of base material (wt%) | Al alloy coating | | Other element (at%) | Post treat-ment | Corrosion resistance (weight loss) | Pit corrosion of base material | Spot weld-ability in continuous spot welding | Formability | | Remarks |
| | | Basic compo-sition (wt%) | weight (g/m²) | | | | | | (1) | (2) | |
|---|---|---|---|---|---|---|---|---|---|---|---|
| 137 | Al-5.5%Zn | Al-30%Mn | 20 | 1.0%Zn | — | 4 | ◎ | 4 | ◎ | ○ | Invent. |
| 138 | Al-4.0%Cu-0.5%Mg-0.5%Mn | Al-30%Mn | 20 | 0.1%Zn | — | 4 | ◎ | 4 | ◎ | ○ | " |
| 139 | Al-4.0%Cu-0.5%Mg-0.5%Mn | Al-30%Mn | 20 | 1.0%Zn | — | 4 | ◎ | 4 | ◎ | ○ | " |
| 140 | Al-1.6%Cu-2.5%Mg-5.6%Zn-0.3%Cr | Al-30%Mn | 20 | 1.0%Zn | — | 4 | ◎ | 4 | ◎ | ○ | " |
| 141 | Al-1%Mg-0.5%Si | Al-0.1%Mn | 20 | 3.0%Ti | — | 1 | × | 5 | ◎ | ○ | Compar. |
| 142 | Al-1%Mg-0.5%Si | Al-1%Mn | 20 | 3.0%Ti | — | 2 | △ | 5 | ◎ | ○ | Invent. |
| 143 | Al-1%Mg-0.5%Si | Al-10%Mn | 20 | 3.0%Ti | — | 3 | ○ | 5 | ◎ | ○ | " |
| 144 | Al-1%Mg-0.5%Si | Al-25%Mn | 20 | 3.0%Ti | — | 4 | ○ | 5 | ◎ | ○ | " |
| 145 | Al-1%Mg-0.5%Si | Al-35%Mn | 20 | 3.0%Ti | — | 4 | ○ | 5 | ◎ | ○ | " |
| 146 | Al-1%Mg-0.5%Si | Al-45%Mn | 20 | 3.0%Ti | — | 3 | ○ | 5 | ○ | △ | " |
| 147 | Al-1%Mg-0.5%Si | Al-55%Mn | 20 | 3.0%Ti | — | 2 | △ | 5 | △ | × | Compar. |
| 148 | Al-1%Mg-0.5%Si | Al-30%Mn | 0.05 | 3.0%Ti | — | 1 | × | 5 | ◎ | ○ | " |
| 149 | Al-1%Mg-0.5%Si | Al-30%Mn | 0.1 | 3.0%Ti | — | 2 | △ | 5 | ◎ | ○ | Invent. |
| 150 | Al-1%Mg-0.5%Si | Al-30%Mn | 2 | 3.0%Ti | — | 3 | ○ | 5 | ◎ | ○ | " |
| 151 | Al-1%Mg-0.5%Si | Al-30%Mn | 5 | 3.0%Ti | — | 3 | ○ | 5 | ◎ | ○ | " |
| 152 | Al-1%Mg-0.5%Si | Al-30%Mn | 20 | 3.0%Ti | — | 4 | ○ | 5 | ◎ | ○ | " |
| 153 | Al-1%Mg-0.5%Si | Al-30%Mn | 30 | 3.0%Ti | — | 4 | ○ | 5 | ◎ | ○ | " |
| 154 | Al-1%Mg-0.5%Si | Al-30%Mn | 50 | 3.0%Ti | — | 5 | ○ | 4 | ○ | △ | " |
| 155 | Al-1%Mg-0.5%Si | Al-30%Mn | 60 | 3.0%Ti | — | 5 | ○ | 3 | △ | × | Compar. |
| 156 | Al-1%Mg-0.5%Si | Al-30%Mn | 20 | 0.005%Ti | — | 4 | ○ | 5 | ◎ | ○ | Invent. |
| 157 | Al-1%Mg-0.5%Si | Al-30%Mn | 20 | 0.1%Ti | — | 4 | ○ | 5 | ◎ | ○ | " |
| 158 | Al-1%Mg-0.5%Si | Al-30%Mn | 20 | 1.0%Ti | — | 4 | ○ | 5 | ◎ | ○ | " |
| 159 | Al-1%Mg-0.5%Si | Al-30%Mn | 20 | 3.0%Ti | — | 4 | ○ | 5 | ◎ | ○ | " |
| 160 | Al-1%Mg-0.5%Si | Al-30%Mn | 20 | 5.0%Ti | — | 3 | ○ | 5 | ◎ | ○ | " |
| 161 | Al-1%Mg-0.5%Si | Al-30%Mn | 20 | 10.0%Ti | — | 2 | △ | 5 | ◎ | ○ | Compar. |
| 162 | Al-1%Mg-0.5%Si | Al-30%Mn | 20 | 0.1%Cr | — | 4 | ○ | 5 | ◎ | ○ | Invent. |
| 163 | Al-1%Mg-0.5%Si | Al-30%Mn | 20 | 1.0%Cr | — | 4 | ○ | 5 | ◎ | ○ | " |
| 164 | Al-1%Mg-0.5%Si | Al-30%Mn | 20 | 3.0%Cr | — | 4 | ○ | 5 | ◎ | ○ | " |
| 165 | Al-1%Mg-0.5%Si | Al-30%Mn | 20 | 0.1%Mo | — | 4 | ○ | 5 | ◎ | ○ | " |
| 166 | Al-1%Mg-0.5%Si | Al-30%Mn | 20 | 1.0%Mo | — | 4 | ○ | 5 | ◎ | ○ | " |
| 167 | Al-1%Mg-0.5%Si | Al-30%Mn | 20 | 3.0%Mo | — | 4 | ○ | 5 | ◎ | ○ | " |
| 168 | Al-1%Mg-0.5%Si | Al-30%Mn | 20 | 3.0%Zr | — | 4 | ○ | 5 | ◎ | ○ | " |
| 169 | Al-1%Mg-0.5%Si | Al-30%Mn | 20 | 3.0%Hf | — | 4 | ○ | 5 | ◎ | ○ | " |
| 170 | Al-1%Mg-0.5%Si | Al-30%Mn | 20 | 3.0%V | — | 4 | ○ | 5 | ◎ | ○ | " |
| 171 | Al-1%Mg-0.5%Si | Al-30%Mn | 20 | 3.0%Nb | — | 4 | ○ | 5 | ◎ | ○ | " |

(to be continued)

EP 0 489 427 A1

EP 0 489 427 A1

TABLE 1 (continued)

| Run No. | Composition of base material (wt%) | Al alloy coating Basic composition (wt%) | weight (g/m²) | Other element (at%) | Post treatment | Corrosion resistance (weight loss) | Pit corrosion of base material | Spot weldability in continuous spot welding | Formability (1) | (2) | Remarks |
|---|---|---|---|---|---|---|---|---|---|---|---|
| 172 | Al-1%Mg-0.5%Si | Al-30%Mn | 20 | 3.0%Ta | — | 4 | ○ | 5 | ◎ | ○ | Invent. |
| 173 | Al-1%Mg-0.5%Si | Al-30%Mn | 20 | 3.0%W | — | 4 | ○ | 5 | ◎ | ○ | " |
| 174 | Al-1%Mg-0.5%Si | Al-30%Mn | 20 | 3.0%Re | — | 4 | ○ | 5 | ◎ | ○ | " |
| 175 | pure Al | Al-30%Mn | 20 | 1.0%Ti | — | 4 | ○ | 5 | ◎ | ○ | " |
| 176 | pure Al | Al-30%Mn | 20 | 3.0%Ti | — | 4 | ○ | 5 | ◎ | ○ | " |
| 177 | Al-5.5%Cu | Al-30%Mn | 20 | 1.0%Ti | — | 4 | ○ | 5 | ◎ | ○ | " |
| 178 | Al-5.5%Cu | Al-30%Mn | 20 | 3.0%Ti | — | 4 | ○ | 5 | ◎ | ○ | " |
| 179 | Al-1.3%Mn | Al-30%Mn | 20 | 1.0%Ti | — | 4 | ○ | 5 | ◎ | ○ | " |
| 180 | Al-1.3%Mn | Al-30%Mn | 20 | 3.0%Ti | — | 4 | ○ | 5 | ◎ | ○ | " |
| 181 | Al-5.0%Mg | Al-30%Mn | 20 | 1.0%Ti | — | 4 | ○ | 5 | ◎ | ○ | " |
| 182 | Al-5.0%Mg | Al-30%Mn | 20 | 3.0%Ti | — | 4 | ○ | 5 | ◎ | ○ | " |
| 183 | Al-5.5%Zn | Al-30%Mn | 20 | 1.0%Ti | — | 4 | ○ | 5 | ◎ | ○ | " |
| 184 | Al-5.5%Zn | Al-30%Mn | 20 | 3.0%Ti | — | 4 | ○ | 5 | ◎ | ○ | " |
| 185 | Al-4.0%Cu-0.5%Mg-0.5%Mn | Al-30%Mn | 20 | 1.0%Ti | — | 4 | ○ | 5 | ◎ | ○ | " |
| 186 | Al-4.0%Cu-0.5%Mg-0.5%Mn | Al-30%Mn | 20 | 3.0%Ti | — | 4 | ○ | 5 | ◎ | ○ | " |
| 187 | Al-1.6%Cu-2.5%Mg-5.6%Zn-0.3%Cr | Al-30%Mn | 20 | 3.0%Ti | — | 4 | ○ | 5 | ◎ | ○ | " |
| 188 | Al-1%Mg-0.5%Si | Al-25%Mn | 20 | — | — | 4 | ○ | 4 | ◎ | ○ | " |
| 189 | Al-1%Mg-0.5%Si | Al-25%Mn | 20 | — | OX | 5 | ◎ | 4 | ◎ | ○ | " |
| 190 | Al-1%Mg-0.5%Si | Al-25%Mn | 20 | — | CR | 5 | ◎ | 4 | ◎ | ○ | " |
| 191 | pure Al | Al-25%Mn | 20 | — | — | 4 | ○ | 4 | ◎ | ○ | " |
| 192 | pure Al | Al-25%Mn | 20 | — | OX | 5 | ◎ | 4 | ◎ | ○ | " |
| 193 | pure Al | Al-25%Mn | 20 | — | CR | 5 | ◎ | 4 | ◎ | ○ | " |
| 194 | Al-5.5%Cu | Al-25%Mn | 20 | — | — | 4 | ○ | 4 | ◎ | ○ | " |
| 195 | Al-5.5%Cu | Al-25%Mn | 20 | — | OX | 5 | ◎ | 4 | ◎ | ○ | " |
| 196 | Al-5.5%Cu | Al-25%Mn | 20 | — | CR | 5 | ◎ | 4 | ◎ | ○ | " |
| 197 | Al-1.3%Mn | Al-25%Mn | 20 | — | — | 4 | ○ | 4 | ◎ | ○ | " |
| 198 | Al-1.3%Mn | Al-25%Mn | 20 | — | OX | 5 | ◎ | 4 | ◎ | ○ | " |
| 199 | Al-1.3%Mn | Al-25%Mn | 20 | — | CR | 5 | ◎ | 4 | ◎ | ○ | " |
| 200 | Al-5.0%Mg | Al-25%Mn | 20 | — | — | 4 | ○ | 4 | ◎ | ○ | " |
| 201 | Al-5.0%Mg | Al-25%Mn | 20 | — | OX | 5 | ◎ | 4 | ◎ | ○ | " |
| 202 | Al-5.0%Mg | Al-25%Mn | 20 | — | CR | 5 | ◎ | 4 | ◎ | ○ | " |
| 203 | Al-5.5%Zn | Al-25%Mn | 20 | — | — | 4 | ○ | 4 | ◎ | ○ | " |
| 204 | Al-5.5%Zn | Al-25%Mn | 20 | — | OX | 5 | ◎ | 4 | ◎ | ○ | " |
| 205 | Al-5.5%Zn | Al-25%Mn | 20 | — | CR | 5 | ◎ | 4 | ◎ | ○ | " |
| 206 | Al-4.0%Cu-0.5%Mg-0.5%Mn | Al-25%Mn | 20 | — | — | 4 | ○ | 4 | ◎ | ○ | " |

(to be continued)

TABLE 1 (continued)

| Run No. | Composition of base material (wt%) | Al alloy coating | | Other element (at%) | Post treat-ment | Corrosion resistance (weight loss) | Pit corrosion of base material. | Spot weld-ability in continuous spot welding | Formability | | Remarks |
| --- | --- | --- | --- | --- | --- | --- | --- | --- | --- | --- | --- |
| | | Basic composition (wt%) | weight (g/m²) | | | | | | (1) | (2) | |
| 207 | Al-4.0%Cu-0.5%Mg-0.5%Mn | Al-25%Mn | 20 | — | OX | 5 | ◎ | 4 | ◎ | ○ | Invent. |
| 208 | Al-4.0%Cu-0.5%Mg-0.5%Mn | Al-25%Mn | 20 | — | CR | 5 | ◎ | 4 | ◎ | ○ | " |
| 209 | Al-1%Mg-0.5%Si | Al-25%Mn | 20 | 5.0%Fe | — | 4 | ○ | 4 | ◎ | ◎ | " |
| 210 | Al-1%Mg-0.5%Si | Al-25%Mn | 20 | 5.0%Fe | OX | 5 | ◎ | 4 | ◎ | ◎ | " |
| 211 | Al-1%Mg-0.5%Si | Al-25%Mn | 20 | 5.0%Fe | CR | 5 | ◎ | 4 | ◎ | ◎ | " |
| 212 | Al-1%Mg-0.5%Si | Al-30%Mn | 20 | 5.0%Fe | PH | 5 | ◎ | 4 | ◎ | ◎ | " |
| 213 | pure Al | Al-25%Mn | 20 | 5.0%Fe | — | 4 | ○ | 4 | ◎ | ◎ | " |
| 214 | pure Al | Al-25%Mn | 20 | 5.0%Fe | OX | 5 | ◎ | 4 | ◎ | ◎ | " |
| 215 | pure Al | Al-25%Mn | 20 | 5.0%Fe | CR | 5 | ◎ | 4 | ◎ | ◎ | " |
| 216 | Al-5.5%Cu | Al-25%Mn | 20 | 5.0%Fe | — | 4 | ○ | 4 | ◎ | ◎ | " |
| 217 | Al-5.5%Cu | Al-25%Mn | 20 | 5.0%Fe | OX | 5 | ◎ | 4 | ◎ | ◎ | " |
| 218 | Al-5.5%Cu | Al-25%Mn | 20 | 5.0%Fe | CR | 5 | ◎ | 4 | ◎ | ◎ | " |
| 219 | Al-1.3%Mn | Al-25%Mn | 20 | 5.0%Fe | — | 4 | ○ | 4 | ◎ | ◎ | " |
| 220 | Al-1.3%Mn | Al-25%Mn | 20 | 5.0%Fe | OX | 5 | ◎ | 4 | ◎ | ◎ | " |
| 221 | Al-1.3%Mn | Al-25%Mn | 20 | 5.0%Fe | CR | 5 | ◎ | 4 | ◎ | ◎ | " |
| 222 | Al-5.0%Mg | Al-25%Mn | 20 | 5.0%Fe | — | 4 | ○ | 4 | ◎ | ◎ | " |
| 223 | Al-5.0%Mg | Al-25%Mn | 20 | 5.0%Fe | OX | 5 | ◎ | 4 | ◎ | ◎ | " |
| 224 | Al-5.0%Mg | Al-25%Mn | 20 | 5.0%Fe | CR | 5 | ◎ | 4 | ◎ | ◎ | " |
| 225 | Al-5.5%Zn | Al-25%Mn | 20 | 5.0%Fe | — | 4 | ○ | 4 | ◎ | ◎ | " |
| 226 | Al-5.5%Zn | Al-25%Mn | 20 | 5.0%Fe | OX | 5 | ◎ | 4 | ◎ | ◎ | " |
| 227 | Al-5.5%Zn | Al-25%Mn | 20 | 5.0%Fe | CR | 5 | ◎ | 4 | ◎ | ◎ | " |
| 228 | Al-4.0%Cu-0.5%Mg-0.5%Mn | Al-25%Mn | 20 | 5.0%Fe | — | 4 | ○ | 4 | ◎ | ◎ | " |
| 229 | Al-4.0%Cu-0.5%Mg-0.5%Mn | Al-25%Mn | 20 | 5.0%Fe | OX | 5 | ◎ | 4 | ◎ | ◎ | " |
| 230 | Al-4.0%Cu-0.5%Mg-0.5%Mn | Al-25%Mn | 20 | 5.0%Fe | CR | 5 | ◎ | 4 | ◎ | ◎ | " |
| 231 | Al-4.0%Cu-0.5%Mg-0.5%Mn | Al-30%Mn | 20 | 5.0%Fe | PH | 5 | ◎ | 4 | ◎ | ◎ | " |
| 232 | Al-1%Mg-0.5%Si | Al-25%Mn | 20 | 1.0%Zn | — | 4 | ◎ | 4 | ◎ | ○ | " |
| 233 | Al-1%Mg-0.5%Si | Al-25%Mn | 20 | 1.0%Zn | OX | 5 | ◎ | 4 | ◎ | ○ | " |
| 234 | Al-1%Mg-0.5%Si | Al-25%Mn | 20 | 1.0%Zn | CR | 5 | ◎ | 4 | ◎ | ○ | " |
| 235 | Al-1%Mg-0.5%Si | Al-30%Mn | 20 | 1.0%Zn | PH | 5 | ◎ | 4 | ◎ | ○ | " |
| 236 | pure Al | Al-25%Mn | 20 | 1.0%Zn | — | 4 | ◎ | 4 | ◎ | ○ | " |
| 237 | pure Al | Al-25%Mn | 20 | 1.0%Zn | OX | 5 | ◎ | 4 | ◎ | ○ | " |
| 238 | pure Al | Al-25%Mn | 20 | 1.0%Zn | CR | 5 | ◎ | 4 | ◎ | ○ | " |
| 239 | Al-5.5%Cu | Al-25%Mn | 20 | 1.0%Zn | — | 4 | ◎ | 4 | ◎ | ○ | " |
| 240 | Al-5.5%Cu | Al-25%Mn | 20 | 1.0%Zn | OX | 5 | ◎ | 4 | ◎ | ○ | " |
| 241 | Al-5.5%Cu | Al-25%Mn | 20 | 1.0%Zn | CR | 5 | ◎ | 4 | ◎ | ○ | " |

(to be continued)

EP 0 489 427 A1

TABLE 1 (continued)

| Run No. | Composition of base material (wt%) | Al alloy coating Basic composition (wt%) | weight (g/m²) | Other element (at%) | Post treatment | Corrosion resistance (weight loss) | Pit corrosion of base material | Spot weldability in continuous spot welding | Formability (1) | (2) | Remarks |
|---|---|---|---|---|---|---|---|---|---|---|---|
| 242 | Al-1.3%Mn | Al-25%Mn | 20 | 1.0%Zn | — | 4 | ◎ | 4 | ◎ | ○ | Invent. |
| 243 | Al-1.3%Mn | Al-25%Mn | 20 | 1.0%Zn | OX | 5 | ◎ | 4 | ◎ | ○ | " |
| 244 | Al-1.3%Mn | Al-25%Mn | 20 | 1.0%Zn | CR | 5 | ◎ | 4 | ◎ | ○ | " |
| 245 | Al-5.0%Mg | Al-25%Mn | 20 | 1.0%Zn | — | 4 | ◎ | 4 | ◎ | ○ | " |
| 246 | Al-5.0%Mg | Al-25%Mn | 20 | 1.0%Zn | OX | 5 | ◎ | 4 | ◎ | ○ | " |
| 247 | Al-5.0%Mg | Al-25%Mn | 20 | 1.0%Zn | CR | 5 | ◎ | 4 | ◎ | ○ | " |
| 248 | Al-5.5%Zn | Al-25%Mn | 20 | 1.0%Zn | — | 4 | ◎ | 4 | ◎ | ○ | " |
| 249 | Al-5.5%Zn | Al-25%Mn | 20 | 1.0%Zn | OX | 5 | ◎ | 4 | ◎ | ○ | " |
| 250 | Al-5.5%Zn | Al-25%Mn | 20 | 1.0%Zn | CR | 5 | ◎ | 4 | ◎ | ○ | " |
| 251 | Al-4.0%Cu-0.5%Mg-0.5%Mn | Al-25%Mn | 20 | 1.0%Zn | — | 4 | ◎ | 4 | ◎ | ○ | " |
| 252 | Al-4.0%Cu-0.5%Mg-0.5%Mn | Al-25%Mn | 20 | 1.0%Zn | OX | 5 | ◎ | 4 | ◎ | ○ | " |
| 253 | Al-4.0%Cu-0.5%Mg-0.5%Mn | Al-25%Mn | 20 | 1.0%Zn | CR | 5 | ◎ | 4 | ◎ | ○ | " |
| 254 | Al-4.0%Cu-0.5%Mg-0.5%Mn | Al-30%Mn | 20 | 1.0%Zn | PH | 5 | ◎ | 4 | ◎ | ○ | " |
| 255 | Al-1%Mg-0.5%Si | Al-25%Mn | 20 | 3.0%Ti | — | 4 | ○ | 5 | ◎ | ○ | " |
| 256 | Al-1%Mg-0.5%Si | Al-25%Mn | 20 | 3.0%Ti | OX | 5 | ◎ | 5 | ◎ | ○ | " |
| 257 | Al-1%Mg-0.5%Si | Al-25%Mn | 20 | 3.0%Ti | CR | 5 | ◎ | 5 | ◎ | ○ | " |
| 258 | Al-1%Mg-0.5%Si | Al-30%Mn | 20 | 3.0%Ti | PH | 5 | ◎ | 5 | ◎ | ○ | " |
| 259 | pure Al | Al-25%Mn | 20 | 3.0%Ti | — | 4 | ○ | 5 | ◎ | ○ | " |
| 260 | pure Al | Al-25%Mn | 20 | 3.0%Ti | OX | 5 | ◎ | 5 | ◎ | ○ | " |
| 261 | pure Al | Al-25%Mn | 20 | 3.0%Ti | CR | 5 | ◎ | 5 | ◎ | ○ | " |
| 262 | Al-5.5%Cu | Al-25%Mn | 20 | 3.0%Ti | — | 4 | ○ | 5 | ◎ | ○ | " |
| 263 | Al-5.5%Cu | Al-25%Mn | 20 | 3.0%Ti | OX | 5 | ◎ | 5 | ◎ | ○ | " |
| 264 | Al-5.5%Cu | Al-25%Mn | 20 | 3.0%Ti | CR | 5 | ◎ | 5 | ◎ | ○ | " |
| 265 | Al-1.3%Mn | Al-25%Mn | 20 | 3.0%Ti | — | 4 | ○ | 5 | ◎ | ○ | " |
| 266 | Al-1.3%Mn | Al-25%Mn | 20 | 3.0%Ti | OX | 5 | ◎ | 5 | ◎ | ○ | " |
| 267 | Al-1.3%Mn | Al-25%Mn | 20 | 3.0%Ti | CR | 5 | ◎ | 5 | ◎ | ○ | " |
| 268 | Al-5.0%Mg | Al-25%Mn | 20 | 3.0%Ti | — | 4 | ○ | 5 | ◎ | ○ | " |
| 269 | Al-5.0%Mg | Al-25%Mn | 20 | 3.0%Ti | OX | 5 | ◎ | 5 | ◎ | ○ | " |
| 270 | Al-5.0%Mg | Al-25%Mn | 20 | 3.0%Ti | CR | 5 | ◎ | 5 | ◎ | ○ | " |
| 271 | Al-5.5%Zn | Al-25%Mn | 20 | 3.0%Ti | — | 4 | ○ | 5 | ◎ | ○ | " |
| 272 | Al-5.5%Zn | Al-25%Mn | 20 | 3.0%Ti | OX | 5 | ◎ | 5 | ◎ | ○ | " |
| 273 | Al-5.5%Zn | Al-25%Mn | 20 | 3.0%Ti | CR | 5 | ◎ | 5 | ◎ | ○ | " |
| 274 | Al-4.0%Cu-0.5%Mg-0.5%Mn | Al-30%Mn | 20 | 3.0%Ti | PH | 5 | ◎ | 5 | ◎ | ○ | " |

1) OX = Electrolytic Oxidataion (Oxide Film);   CR = Chromating Treatment (Chromate Coating);
PH = Phosphating Treatment (Zinc Phosphate Coating)

As can be seen from Table 1, all the surface-coated aluminum or aluminum alloy sheets according to the present invention marked "invent." in Table 1 exhibited low corrosion weight losses (good corrosion resistance) and also had improved formability. The corrosion resistance was further improved by post-treatment to form an oxide film or chemical conversion (chromating or zinc phosphating) coating layer on the Al-Mn alloy plating. Those surface-coated sheets according to the present invention having a surface coating of an Al-Mn alloy which further contained at least one of Ti, Zr, Hf, V, Nb, Ta, Cr, Mo, W, and Re exhibited particularly improved spot weldability.

In contrast, the surface-coated aluminum or aluminum alloy sheets in Comparative runs marked "compar." in Table 1, in which the alloy composition or coating weight of the Al-Mn alloy plating was outside the range defined herein, were degraded with respect to at least one of corrosion resistance, spot weldability, and formability.

When the base aluminum or aluminum alloy sheets used in the example were subjected to a salt spray test without surface coating, they exhibited significantly increased corrosion weight losses with corrosion by pitting.

Although the present invention has been described with respect to preferred embodiments, it is to be understood that variations and modifications may be employed without departing from the concept of the invention as defined in the following claims.

**Claims**

1. A surface-coated aluminum material having improved corrosion resistance, comprising a base aluminum or aluminum alloy material having on at least one surface thereof an aluminum-manganese alloy coating with a coating weight of 0.1 - 50 g/m$^2$, said aluminum-manganese alloy coating having the composition:

   Al-aMn-bX-cY-dZ

   where a, b, c, and d are the contents of Mn, X, Y, and Z elements, respectively, and a is 1 - 50 weight percent, b is 0 - 10 atomic percent, c is 0 - 3 atomic percent, and d is 0 - 5 atomic percent;
   X is one or more metals selected from the group consisting of Cu, Ag, Fe, Co, and Ni;
   Y is one or more metals selected from the group consisting of Mg, Ca, Sr, Ba, Zn, Cd, In, Tl, Si, Ge, Sn, Pb, As, Sb, and Bi;
   Z is one or more metals selected from the group consisting of Ti, Zr, Hf, V, Nb, Ta, Cr, Mo, W, and Re; and
   Al comprises the balance of the alloy.

2. The surface-coated aluminum material of Claim 1, wherein the aluminum-manganese alloy coating is further coated with an oxide coating or a chemical conversion coating.

3. The surface-coated aluminum material of Claim 1 or 2, wherein the aluminum-manganese alloy coating has the composition Al-aMn, where a is 1 - 50 weight percent.

4. The surface-coated aluminum material of Claim 1 or 2, wherein the aluminum-manganese alloy coating has the composition Al-aMn-bX, where a is 1 - 50 weight percent, b is 0.005 - 10 atomic percent, and X is as defined in Claim 1.

5. The surface-coated aluminum material of Claim 1 or 2, wherein the aluminum-manganese alloy coating has the composition Al-aMn-cY, where a is 1 - 50 weight percent, c is 0.002 - 3 atomic percent, and Y is as defined in Claim 1.

6. The surface-coated aluminum material of Claim 1 or 2, wherein the aluminum-manganese alloy coating has the composition Al-aMn-dZ, where a is 1 - 50 weight percent, d is 0.005 - 5 atomic percent, and Z is as defined in Claim 1.

7. The surface-coated aluminum material of Claim 1 or 2, wherein the aluminum-manganese alloy coating has the composition Al-aMn-bX-cY, where a is 1 - 50 weight percent, b is 0.005 - 10 atomic percent, c is 0.002 - 3 atomic percent, and X and Y are as defined in Claim 1.

8. The surface-coated aluminum material of Claim 1 or 2, wherein the aluminum-manganese alloy coating has the composition Al-aMn-bX-dZ, where a is 1 - 50 weight percent, b is 0.005 - 10 atomic percent, d is 0.005 - 5 atomic percent, and X and Z are as defined in Claim 1.

9. The surface-coated aluminum material of Claim 1 or 2, wherein the aluminum-manganese alloy coating has the composition Al-aMn-cY-dZ, where a is 1 - 50 weight percent, c is 0.002 - 3 atomic percent, d is

16

0.005 - 5 atomic percent, and Y and Z are as defined in Claim 1.

10. The surface-coated aluminum material of Claim 1 or 2, wherein the aluminum-manganese alloy coating has the composition Al-aMn-bX-cY-dZ, where a is 1 - 50 weight percent, b is 0.005 - 10 atomic percent, c is 0.002 - 3 atomic percent, d is 0.005 - 5 atomic percent, and X, Y and Z are as defined in Claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-1 466 294 (TREFIMETAUX)<br>* page 1, column 2, line 35 - page 2, column 1, line 5 *<br>* page 2, column 1, line 32 - line 39 *<br>* page 3, column 1, line 24 - line 30 *<br>--- | 1-3,5 | B32B15/01<br>C23C28/00<br>C23C30/00 |
| A | US-A-3 285 717 (E.F. FISCHER)<br>* the whole document *<br>--- | 1,4,5,7 | |
| A | EP-A-0 282 174 (ALCAN INTERNATIONAL LTD)<br>* the whole document *<br>--- | 1,5 | |
| A | US-A-3 859 058 (W.H. ANTHONY ET AL)<br>* the whole document *<br>----- | 1,6 | |
| | | | **TECHNICAL FIELDS SEARCHED (Int. Cl.5)**<br><br>B32B<br>C23C |

The present search report has been drawn up for all claims

| Place of search | Date of completion of the search | Examiner |
|---|---|---|
| THE HAGUE | 30 MARCH 1992 | JOFFREAU P. |

EPO FORM 1503 03.82 (P0401)